(19)

Europäisches
Patentamt
European
Patent Office
Office européen
des brevets

(11) **EP 2 450 551 A2**

(12) **EUROPEAN PATENT APPLICATION**

(43) Date of publication:
**09.05.2012 Bulletin 2012/19**

(51) Int Cl.:
*F02C 9/40* (2006.01)      *F02C 9/48* (2006.01)
*F01D 17/08* (2006.01)

(21) Application number: **11187143.0**

(22) Date of filing: **28.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.11.2010 US 938415**

(71) Applicant: **General Electric Company
Schenectady, NY 12345 (US)**

(72) Inventors:
• **Kirzhner, Joseph
  Greenville, SC South Carolina 29615 (US)**

• **Vierling, Matthieu
  25490 Dampierre les Bois (FR)**
• **Pourron, Nicolas
  90000 Belfort (FR)**
• **Martin, Denis Michel
  25600 Vieux Charmont (FR)**
• **Popovic, Predrag
  Greenville, SC South Carolina 29615 (US)**

(74) Representative: **Bedford, Grant Richard
  GE International Inc.
  Global Patent Operation-Europe
  15 John Adam Street
  London
  WC2N 6LU (GB)**

(54) **System and method for compensating fuel composition variations in a gas turbine**

(57)    Certain embodiments of the invention may include systems (100) and methods (200) for compensating fuel composition variations in a gas turbine (108). According to an example embodiment of the invention, a method (200) is provided for compensating for fuel composition variations in a turbine. The method can include: monitoring (202) at least one fuel parameter associated with a turbine combustor; monitoring one or more combustion dynamics characteristics associated with the turbine combustor; monitoring (204) one or more performance and emissions characteristics associated with the turbine; estimating (208) fuel composition based at least in part on the at least one fuel parameter, the one or more combustion dynamics characteristics, and the one or more performance and emissions characteristics, and adjusting (210) at least one fuel parameter based at least in part on the estimated fuel composition.

FIG. 1

**Description**

This invention generally relates to gas turbines, and in particular, to compensating fuel composition variations in a gas turbine.

Flexible fuels that are burned in gas turbines often range in composition and associated calorific value. Compared with regular natural gas, flexible fuel composition variations can create certain combustion problems, including elevated emissions, combustion noise (dynamics), undesirable flame holding events, and inefficient burning. Adjusting combustor properties to optimize combustion as a function of fuel composition has traditionally been addressed by using a mass spectrometer, calorimeter, or other fuel measurement techniques such as a Wobbe Index meter. However, such devices are expensive, inaccurate, and have a slow response time. In certain traditional systems, at least three Wobbe Index meters are needed, along with buffer tanks and other expensive infrastructure for determining the fuel composition variations and addressing the related combustion problems.

Some or all of the above needs may be addressed by certain embodiments of the invention. Certain embodiments of the invention may include systems, methods, and apparatus for compensating fuel composition variations in a gas turbine.

According to an example embodiment of the invention, a method is provided for compensating for fuel composition variations in a turbine. The method can include: monitoring at least one fuel parameter associated with a turbine combustor; monitoring one or more combustion dynamics characteristics associated with the turbine combustor; monitoring one or more performance characteristics associated with the turbine; estimating fuel composition based at least in part on the at least one fuel parameter, the one or more combustion dynamics characteristics, and the one or more performance characteristics; and adjusting at least one fuel parameter based at least in part on the estimated fuel composition.

According to another example embodiment, a system is provided for compensating for fuel composition variations in a turbine. The system may include a gas turbine assembly; a gas turbine controller in communication with the gas turbine assembly; one or more sensors in communication with the gas turbine assembly and gas turbine controller; and a fuel evaluator. The fuel evaluator may include at least one processor configured to execute computer-executable instructions for: receiving signals from the one or more sensors; monitoring at least one fuel parameter associated with a turbine combustor; monitoring one or more combustion dynamics characteristics associated with the turbine combustor; monitoring one or more performance characteristics associated with the gas turbine assembly; estimating fuel composition based at least in part on at least one fuel parameter, the one or more combustion dynamics characteristics, and the one or more performance characteristics; and adjusting at least one parameter associated with the fuel based at least in part on the estimated fuel composition.

According to another example embodiment, an apparatus is provided for compensating for fuel composition variations in a turbine. The apparatus may include a fuel evaluator having least one processor configured to execute computer-executable instructions for: monitoring fuel flow to a turbine combustor (106); monitoring one or more combustion dynamics characteristics associated with the turbine combustor (106); monitoring one or more performance characteristics associated with the gas turbine assembly (102); estimating fuel composition based at least in part on the fuel flow, the one or more combustion dynamics characteristics, and the one or more performance characteristics; and adjusting at least one parameter associated with the fuel based at least in part on the estimated fuel composition.

Other embodiments and aspects of the invention are described in detail herein and are considered a part of the claimed inventions. Other embodiments and aspects can be understood with reference to the following detailed description, accompanying drawings, and claims.

Reference will now be made to the accompanying tables and drawings, which are not necessarily drawn to scale, and wherein:

FIG. 1 is a block diagram of an illustrative fuel compensation system, according to an example embodiment of the invention.
FIG. 2 is a flow diagram of an example method according to an example embodiment of the invention.

Various embodiments of the invention will be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

According to example embodiments of the invention, fuel composition properties may be determined with enhanced speed and/or accuracy by utilizing additional information from the turbine, combustor, fuel delivery system, exhaust, etc. In example embodiments, direct or indirect information from the combustion process and/or turbine operation may be measured to determine or predict the fuel composition. In an example embodiment, the information determined about the fuel composition may be utilized to modify or control certain systems related to the turbine in an attempt to optimize the combustion properties. Certain example embodiments of the invention may allow the reduction or elimination of Wobbe Index meters, and may improve control system response time and accuracy.

Certain example embodiments of the invention may reduce error or response lags in the turbine controller by measuring characteristic combustion emissions and/or dynamics information. Example embodiments of the invention may utilize modified Wobbe Index measurements (including fuel lower heating value, temperature, and density) along with estimated fuel properties/composition based on emissions and dynamics changes. In an example embodiment, a universal transfer function (UTF) may utilize measured values and predicted or established reference values such as combustion reference values, exhaust gas, temperatures, etc., to determine the composition of the fuel, and to control the combustor, fuel delivery system, etc. based on the determined fuel composition.

In accordance with example embodiments of the invention, one or more modules may be utilized to determine the fuel composition. For example, the one or more modules may be used for monitoring fuel temperature, fuel flow, and the opening (or stroke) associated with fuel valves. According to an example embodiment, emissions and/or combustion dynamics information may also be monitored. In an example embodiment of the invention, the measurement information from the one or more modules may be input to a controller. The controller may utilize the information to adjust opening/strokes of the fuel valves, adjust fuel throttling to combustor and/or adjust the fuel split between injectors. In certain example embodiments, the controller may utilize monitored information for controlling fueling staging in the injector and/or the combustor. For example, such fueling staging may include radial staging, axial staging, or staging at other locations of fuel injection streams)

According to example embodiments of the invention, the combustor dynamics, firing temperature information, and exhaust gas temperature values that lead to particular operation conditions may be predicted and established using universal transfer function (UTF), which could have a logarithmic format and/or an exponential format, where for the logarithm and/or exponential format, the base may be e = 2.718..., 10, or any other number identified for the specific combustor.

According to an example embodiment, the universal transfer function (UTF) may be utilized to predict emissions dynamics, and flame holding events in a wide range of turbine/combustor temperatures, and for various operating conditions of single or multiple shaft machines.

According to example embodiments of the invention, an example of universal transfer function (UTF) for predicting constituents in the fuel based on measured NOx emissions parameters may take the following form:

$$\mathrm{NO}_x = \mathrm{NGNO}_X \times e^{K1_{NOx}} \times e^{K2_{NOx}} \times e^{K3_{NOx}} \times \ldots \times e^{Kn_{NOx}}.$$

Similarly, an example universal transfer function (UTF) for predicting constituents in the fuel, based on measured CO emissions parameters, may take the following form:

$$\mathrm{CO} = \mathrm{NGCO} \times e^{K1_{CO}} \times e^{K2_{CO}} \times e^{K3_{CO}} \times \ldots \times e^{Kn_{CO}}.$$

A similar example form of the universal transfer function (UTF) may be used for predicting constituents in the fuel based on combustion dynamics. In example embodiments, the exponential coefficients ($K1_x$, $K2_x$,....$Kn_x$) may be determined utilizing a post exponential coefficient $\alpha$ of a natural gas base load functions of emissions or dynamics versus operating temperature curves, and in turn, may be utilized to determine percentage of a particular constituent doping. For example,

$$\mathrm{Kn}_x = \alpha \times (\upsilon \times \%Doping),$$

where $\upsilon$ represents a universal transfer function (UTF) coefficient for predicting the constituents associated with fuel such as nitrogen, carbon oxides, ethane, hydrogen, propane, butane, etc.

In accordance with certain embodiments of the invention, $\upsilon = 0$ may correspond to "natural gas only" fuel. Higher $\upsilon$ may indicate worse NOx and better CO. In accordance with certain example embodiments of the invention, one or more emissions parameters, including NOx, CO, or unburned hydrocarbons may be monitored. In certain embodiments, performance parameters including, but not limited to, temperature, compressor pressure ratio, load, or speed may be additionally monitored. According to example embodiments, fuel composition may be estimated based at least in part on one or more of the one or more monitored emissions parameters or the one or more monitored performance parameters. In an example embodiment, at least one turbine operating parameter may be adjusted based at least in part on the estimated fuel composition.

According to an example embodiment, fuel composition may be estimated by utilizing a universal transfer function (UTF) to determine flame holding events and/or fuel constituents based at least in part on one or more of the one or more monitored emissions parameters or the one or more monitored performance parameters. Flame holding events, for example may include burner flame velocity, position, and/or combustion dynamics. In example embodiments, flame holding events may relate to the amount of fuel being combusted, the fuel split and distribution to nozzles, the air/fuel ratio, and the position of the flame with respect to the burner nozzle. According to example embodiments, the fuel composition may be based on the UTF predictions of flame holding events. For example, the fuel composition calorific value may be adjusted by controlling valves 112 associated with various fuel supply lines. In certain example embodiments, turbine operating parameters may be controlled based on the UTF predictions of flame holding events. For example the turbine operating parameters may include, but are not limited to, fuel parameters, fuel flow, fuel valve stroke, throttling valve stroke, split valve stroke, fuel pressure, fuel temperature, fuel lower heating value, fuel composition, split ratio, or air/fuel ratio. According to example embodiments, the fuel constituents may include, but are not limited to, one or more of nitrogen, carbon oxides, ethane, hydrogen, propane, butane, or natural gas.

According to certain example embodiments of the invention, a Wobbe index of the fuel may be measured and/or monitored, and the fuel composition may be estimated based in part on the Wobbe index. In an example embodiment, the monitored Wobbe index may be utilized by a universal transfer function (UTF) to determine fuel constituents based at least on the monitored Wobbe index. According to an example embodiment, the fuel constituents may include, but are not limited to, one or more of: nitrogen, carbon oxides, ethane, hydrogen, propane, butane, or natural gas.

According to an example embodiment, at least one fuel parameter, one or more combustion dynamics, and/or one or more performance characteristics associated with a turbine combustor may be monitored, and the fuel composition may be estimated based at least in part on the at least one fuel parameter, and/or the one or more combustion dynamics characteristics, and/or and the one or more performance characteristics. According to an example embodiment, at least one fuel parameter may be adjusted based at least in part on the estimated fuel composition. In an example embodiment, fuel parameters may include, but are not limited to, one or more of fuel flow, fuel valve stroke, throttling valve stroke, split valve stroke, fuel pressure, fuel temperature, fuel lower heating value, fuel composition, split ratio, or air/fuel ratio. In accordance with certain example embodiments, fuel parameters may include, but are not limited to the fuel split ratio between injectors, the fueling staging of the injectors and the combustor. For example, fuel staging may include radial, axial, or position staging of fuel injection streams.

In an example embodiment, the one or more combustion dynamics characteristics may include, but are not limited to, one or more of acoustical amplitude, acoustical frequency, optical intensity, optical frequency, flame instabilities and/or flame holding events. According to an example embodiment, the one or more performance characteristics may include, but are not limited to, one or more of compressor pressure discharge (CPD), compressor temperature discharge (CTD), turbine firing temperature, turbine exhaust temperature, turbine load, fuel flow rate, pressure, temperature, compressor inlet air pressure drop, compressor inlet flow, compressor inlet guide vanes (IGV) opening, turbine exhaust fluids flow, and ambient air conditions comprising one or more of air temperature, air pressure, air humidity, flame holding events, or heat balance.

According to certain example embodiments, various parameters may be calculated based on one or measured values. For example, calculated values may include, but are not limited to: turbine firing temperature, combustor operating temperature, compressor inlet flow, turbine exhaust flow, turbine fluids losses flow. According to an example embodiment, a universal transfer function may be used to control turbine operation by more accurately defining the operating temperatures. An accurate operating temperature may produce a more accurate definition and control of the widely used real/existing calculated parameter, such as the turbine firing temperature.

In accordance with certain example embodiments of the invention, a universal transfer function may be utilized for controlling at least one turbine operating parameter based at least in part on the one or more performance characteristics, fuel parameters, or combustion dynamics.

According to example embodiments of the invention, various sensors, controllers, and modules for determining the fuel composition and compensating/controlling the gas turbine will now be described with reference to the accompanying figures.

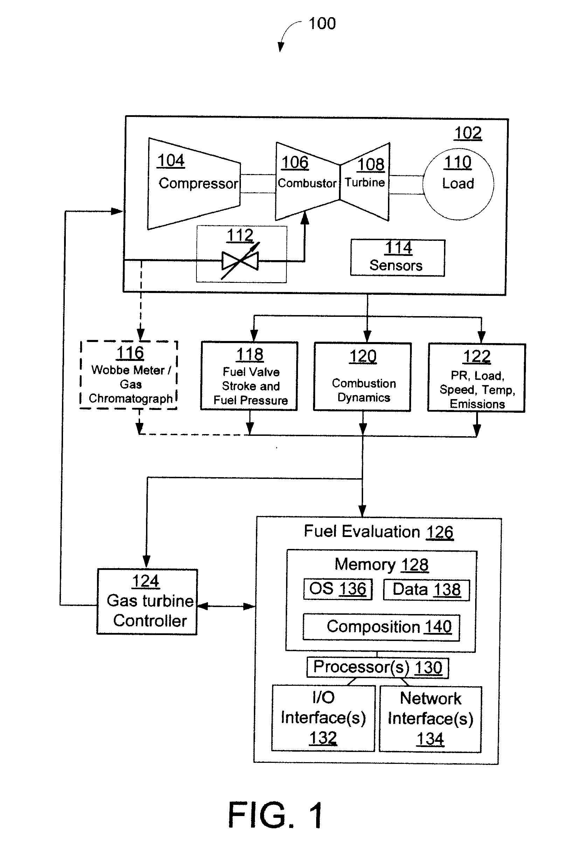

FIG. 1 illustrates an example fuel compensation system 100, according to an example embodiment. The system 100 may include a turbine assembly 102 that may include a compressor 104, a combustor 106, a turbine 108, a load 110, various valves 112 associated with the fuel delivery to the combustor 106, and various sensors 114. According to an example embodiment, the sensors 114 may be utilized for measuring and/or monitoring parameters for estimating/determining the fuel composition. According to an example embodiment, sensors 114 may be utilized for monitoring fuel parameters 118, such as fuel valve stroke and fuel pressure; combustion dynamics 120, such as acoustical amplitude, acoustical frequency, optical intensity, optical frequency, or flame instabilities; and performance characteristics 122, such as compressor pressure discharge (CPD), compressor temperature discharge (CTD), turbine firing temperature, turbine exhaust temperature, turbine load, fuel flow rate, pressure, temperature, compressor inlet air pressure drop, compressor inlet flow, compressor inlet guide vanes (IGV) opening, turbine exhaust fluids flow, and ambient air conditions comprising one or more of air temperature, air pressure, air humidity, or heat balance. According to an example embodiment, an optional Wobbe meter or gas chromatograph 116 may be utilized in addition with one or more of the other measured parameters. According to certain example embodiments, any known industrial or laboratory device (e. g. gas chromatograph, calorimeter, Wobbe meter), which defines fuel composition, may be utilized. According to example embodiments, a universal transfer function may work with such devices in order to correct the device output and/or reduce number/redundancy of such devices and/or to eliminate such device altogether.

According to example embodiments of the invention, the various measurement signals measured may be conditioned, processed, buffered, etc. by the measurement blocks 116-122. According to an example embodiment, a fuel compensation system 100 may include a fuel evaluator 126 that may receive and process the signals received from the sensors 114 or the measurement blocks 116-122. In an example embodiment, the fuel evaluator 126 may include at least one memory 128 for storing data and computer executable instructions, at least one processor 130. In an example embodiment, the fuel evaluator 126 may also include one or more input/output interfaces 132 and/or one or more network interfaces 134. In an example embodiment, the memory 128 may include an operating system 136, data 138, and one or more modules 140 for determining the composition of the fuel.

In an example embodiment, the fuel evaluator 126 may include the measurement blocks 116-122, and may receive the signals directly from the various sensors 114. According to an example embodiment, the fuel compensation system 100 may further include a gas turbine controller 124 that may control various components associated with the turbine assembly. In an example embodiment, the gas turbine controller 124 may use the information or signals processed by the fuel evaluator 126 to control the various valves 112 associated with the fuel delivery to the combustor 106. For example, the turbine controller 124 may be utilized to adjust low and high lower heating value fuel valves, throttling valves, and/or split valves. In an example embodiment, these adjustments may be based at least in part on signals from the fuel evaluator 126 and/or the signals from the sensors 114 and/or signals from the measurement blocks 116-122.

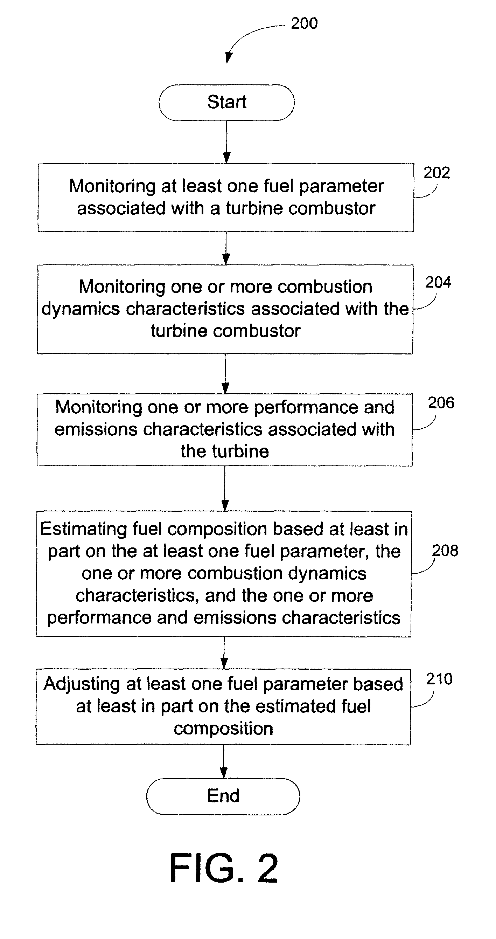

An example method 200 for compensating for fuel composition variations in a turbine will now be described with reference to the flowchart of FIG. 2. The method 200 starts in block 202, and according to an example embodiment of the invention includes monitoring at least one fuel parameter associated with a turbine combustor. In block 204, the method 200 may include monitoring one or more combustion dynamics characteristics associated with the turbine combustor. In block 206, the method 200 may include monitoring one or more performance characteristics associated with the turbine. In block 208, the method 200 may include estimating fuel composition based at least in part on the at least one fuel parameter, the one or more combustion dynamics characteristics, and the one or more performance characteristics. In block 210, the method 200 may include adjusting at least one fuel parameter based at least in part on the estimated fuel composition. The method 200 may end after block 210.

Accordingly, example embodiments of the invention can provide the technical effects of creating certain systems, methods, and apparatus that enable fuel composition properties to be determined with enhanced speed and/or accuracy by utilizing additional information from the turbine, combustor, fuel delivery system, exhaust, etc. Example embodiments of the invention can provide the further technical effects of providing systems, methods, and apparatus for determining fuel composition and using the information to modify, control, or optimize the combustion properties. Example embodiments of the invention can provide the further technical effects of providing systems, methods, and apparatus for reducing or eliminating Wobbe Index meters. Example embodiments of the invention can provide the further technical effects of providing systems, methods, and apparatus for improving control system response time and accuracy.

In example embodiments of the invention, the fuel compensation system 100 may include any number of hardware and/or software applications that are executed to facilitate any of the operations. In example embodiments, one or more input/output interfaces may facilitate communication between sensors 114 in the turbine assembly 102, measurement blocks 116-122, the fuel evaluator 126, the turbine controller 124, and one or more input/output devices. For example, a universal serial bus port, a serial port, a disk drive, a CD-ROM drive, and/or one or more user interface devices, such as a display, keyboard, keypad, mouse, control panel, touch screen display, microphone, etc., may facilitate user interaction with the sensors 114 in the turbine assembly 102, measurement blocks 116-122, the fuel evaluator 126, and the turbine controller 124. The one or more I/O interfaces may be utilized to receive or collect data and/or user instructions from a wide variety of input devices. Received data may be processed by one or more computer processors, as desired, in various embodiments of the invention and/or stored in one or more memory devices.

One or more network interfaces may facilitate connection of the fuel compensation system 100 inputs and outputs to one or more suitable networks and/or connections; for example, the connections that facilitate communication with any number of sensors associated with the system. The one or more network interfaces may further facilitate connection to one or more suitable networks; for example, a local area network, a wide area network, the Internet, a cellular network, a radio frequency network, a Bluetooth™ (Owned by Telefonaktiebolaget LM Ericsson) enabled network, a Wi-Fi™ (owned by Wi-Fi Alliance) enabled network, a satellite-based network any wired network, any wireless network, etc., for communication with external devices and/or systems.

As desired, embodiments of the invention may include the fuel compensation system 100 with more or less of the components illustrated in FIGs. 1 and 2.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer-usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose the invention, including the preferred mode, and also to enable any person skilled in the art to practice the invention, including making and using any devices or systems and performing any incorporated methods. The patentable scope of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:

1. A method for compensating for fuel composition variations in a turbine comprising:

monitoring at least one fuel parameter associated with a turbine combustor;

monitoring one or more combustion dynamics characteristics associated with the turbine combustor;

monitoring one or more performance and emissions characteristics associated with the turbine;

estimating fuel composition based at least in part on the at least one fuel parameter, the one or more combustion dynamics characteristics, and the one or more performance and emissions characteristics; and

adjusting at least one fuel parameter based at least in part on the estimated fuel composition.

2. The method of clause 1, further comprising:

monitoring one or more emissions parameters comprising one or more of: NOx, CO, or unburned hydrocarbons;

monitoring performance parameters comprising one or more of: temperature, compressor pressure ratio, load, or speed;

estimating the fuel composition based at least in part on one or more of the one or more monitored emissions parameters or the one or more monitored performance parameters; and

adjusting at least one turbine operating parameter based at least in part on the estimated fuel composition.

3. The method of any preceding clause, wherein estimating the fuel composition comprises utilizing a universal transfer function (UTF) to determine flame holding events and fuel constituents based at least in part on one or more of the one or more monitored emissions parameters or the one or more monitored performance parameters, wherein the fuel constituents comprise one or more of: nitrogen, ethane, hydrogen, propane, butane, carbon oxides, or natural gas.

4. The method of any preceding clause, further comprising monitoring a Wobbe index of the fuel and further estimating the fuel composition based in part on the Wobbe index.

5. The method of any preceding clause, wherein estimating the fuel composition comprises utilizing a universal transfer function (UTF) to determine fuel constituents based at least on the monitored Wobbe Index, wherein the fuel constituents comprise one or more of: nitrogen, carbon oxides, ethane, hydrogen, propane, butane, or natural gas.

6. The method of any preceding clause, wherein monitoring the at least one fuel parameter comprises monitoring one or more of:

fuel flow, fuel valve stroke, throttling valve stroke, split valve stroke, fuel pressure, fuel temperature, fuel lower heating value, fuel composition, split ratio, or air/fuel ratio; and

wherein adjusting the at least one fuel parameter comprises adjusting one or more of:

fuel flow, fuel valve stroke, throttling valve stroke, split valve stroke, fuel pressure, fuel temperature, fuel lower heating value, fuel composition, fuel calorific value, split ratio, or air/fuel ratio.

7. The method of any preceding clause, wherein monitoring the one or more combustion dynamics characteristics comprises monitoring one or more of: acoustical amplitude, acoustical frequency, optical intensity, optical frequency, flame instabilities, and flame holding events.

8. The method of any preceding clause, wherein monitoring the one or more performance characteristics comprises monitoring one or more of compressor pressure discharge (CPD), compressor temperature discharge (CTD), turbine firing temperature, turbine exhaust temperature, turbine load, fuel flow rate, pressure, temperature, compressor inlet air pressure drop, compressor inlet flow, compressor inlet guide vanes (IGV) opening, turbine exhaust fluids flow, and ambient air conditions comprising one or more of air temperature, air pressure, air humidity, flame holding events, or heat balance.

9. The method of any preceding clause, further comprising utilizing a universal transfer function (UTF) for controlling at least one turbine operating parameter based at least in part on the one or more performance characteristics.

10. A system for compensating for fuel composition variations in a turbine comprising:

a gas turbine assembly;

a gas turbine controller in communication with the gas turbine assembly;

one or more sensors in communication with the gas turbine assembly and gas turbine controller; and

a fuel evaluator comprising at least one processor configured to execute computer-executable instructions for:

receiving signals from the one or more sensors;

monitoring at least one fuel parameter associated with a turbine combustor;

monitoring one or more combustion dynamics characteristics associated with the turbine combustor (106);

monitoring one or more performance and emissions characteristics associated with the gas turbine assembly;

estimating fuel composition based at least in part on at least one fuel parameter, the one or more combustion dynamics characteristics, and the one or more performance and emissions characteristics; and

adjusting at least one parameter associated with the fuel based at least in part on the estimated fuel composition.

11. The system of any preceding clause, wherein:

the one or more sensors are configured for:

monitoring one or more emissions parameters comprising one or more of: NOx, CO, or unburned hydrocarbons; and

monitoring performance parameters comprising one or more of: temperature, compressor pressure ratio, load, or speed; and

the fuel evaluator is configured for:

estimating the fuel composition based at least in part on one or more of the one or more monitored emissions parameters or the one or more monitored performance parameters and

adjusting at least one turbine operating parameter based at least in part on the estimated fuel composition.

12. The system of any preceding clause, wherein estimating the fuel composition comprises utilizing a universal transfer function (UTF) to determine flame holding events and fuel constituents based at least in part on one or more of the one or more monitored emissions parameters or the one or more monitored performance parameters, wherein the fuel constituents comprise one or more of: nitrogen, ethane, hydrogen, propane, butane, carbon oxides, or natural gas.

13. The system of any preceding clause, further comprising a Wobbe meter for monitoring a Wobbe index of the fuel, and wherein the at least one processor is further configured for estimating the fuel composition based in part on the Wobbe index.

14. The system of any preceding clause, wherein estimating the fuel composition comprises utilizing a universal transfer function (UTF) to determine fuel constituents based at least on the monitored Wobbe index, wherein the fuel constituents comprise one or more of: nitrogen, carbon oxides ethane, hydrogen, propane, butane, or natural gas.

15. The system of any preceding clause, wherein monitoring the at least one fuel parameter comprises monitoring one or more of:

fuel flow, fuel valve stroke, throttling valve stroke, split valve stroke, fuel pressure, fuel temperature, fuel lower heating value, fuel composition, split ratio, or air/fuel ratio; and

wherein adjusting the at least one fuel parameter comprises adjusting one or more of:

fuel flow, fuel valve stroke, throttling valve stroke, split valve stroke, fuel pressure, fuel temperature, fuel lower heating value, fuel composition, fuel calorific value, split ratio, or air/fuel ratio.

16. The system of any preceding clause, wherein monitoring the one or more combustion dynamics characteristics comprises monitoring one or more of: acoustical amplitude, acoustical frequency, optical intensity, optical frequency, flame holding events or flame instabilities.

17. The system of any preceding clause, wherein monitoring the one or more performance characteristics comprises monitoring one or more of compressor pressure discharge (CPD), compressor temperature discharge (CTD), turbine firing temperature, turbine exhaust temperature, turbine load, fuel flow rate, pressure, temperature, compressor inlet air pressure drop, compressor inlet flow, compressor inlet guide vanes (IGV) opening, turbine exhaust fluids flow, and ambient air conditions comprising one or more of air temperature, air pressure, air humidity, flame holding events or heat balance.

18. The system of any preceding clause, wherein the fuel evaluator is further configured to utilize a universal transfer function (UTF) for controlling at least one turbine operating parameter based at least in part on the one or more performance characteristics.

19. An apparatus for compensating for fuel composition variations in a turbine comprising:

a fuel evaluator comprising at least one processor configured to execute computer-executable instructions for:

monitoring fuel flow to a turbine combustor;

monitoring one or more combustion dynamics characteristics associated with the turbine combustor;

monitoring one or more performance and emissions characteristics associated with the gas turbine assembly;

estimating fuel composition based at least in part on the fuel flow, the one or more combustion dynamics characteristics, and the one or more performance and emissions characteristics; and

adjusting at least one parameter associated with the fuel based at least in part on the estimated fuel composition.

20. The apparatus of any preceding clause, wherein the fuel evaluator is configured for:

monitoring one or more emissions parameters comprising one or more of:

NOx, CO, or unburned hydrocarbons;

monitoring performance parameters comprising one or more of:

temperature, compressor pressure ratio, load, or speed; and

estimating the fuel composition based in part on one or more of the one or more monitored emissions parameters or the one or more monitored performance parameters, wherein estimating the fuel composition comprises utilizing a universal transfer function (UTF) to determine fuel constituents based at least on the one or more monitored emissions parameters or the one or more monitored performance parameters, wherein the fuel constituents comprise one or more of: nitrogen, carbon oxis, ethane, hydrogen, propane, butane, or natural gas.

**Claims**

1. A method (200) for compensating for fuel composition variations in a turbine comprising:

monitoring (202) at least one fuel parameter associated with a turbine combustor;
monitoring (204) one or more combustion dynamics characteristics associated with the turbine combustor;
monitoring (206) one or more performance and emissions characteristics associated with the turbine;
estimating (208) fuel composition based at least in part on the at least one fuel parameter, the one or more combustion dynamics characteristics, and the one or more performance and emission characteristics; and
adjusting (210) at least one fuel parameter based at least in part on the estimated fuel composition.

**2.** The method (200) of claim 1, further comprising:

monitoring one or more emission parameters comprising one or more of: NOx, CO, or unburned hydrocarbons;
monitoring performance parameters comprising one or more of: temperature, compressor pressure ratio, load, or speed;
estimating (208) the fuel composition based at least in part on one or more of the one or more monitored emission parameters or the one or more monitored performance parameters; and
adjusting (210) at least one turbine operating parameter based at least in part on the estimated fuel composition.

**3.** The method (200) of any preceding claim, wherein estimating (208) the fuel composition comprises utilizing a universal transfer function (UTF) to determine flame holding events and fuel constituents based at least in part on one or more of the one or more monitored emission parameters or the one or more monitored performance parameters, wherein the fuel constituents comprise one or more of: nitrogen, ethane, hydrogen, propane, butane, or natural gas.

**4.** The method (200) of any preceding claim, further comprising monitoring a Wobbe index of the fuel and further estimating the fuel composition based in part on the Wobbe index.

**5.** The method (200) of any preceding claim, wherein estimating (208) the fuel composition comprises utilizing a universal transfer function (UTF) to determine fuel constituents based at least on the monitored Wobbe Index, wherein the fuel constituents comprise one or more of: nitrogen, carbon oxide, ethane, hydrogen, propane, butane, or natural gas.

**6.** The method (200) of any preceding claim, wherein monitoring (204) the at least one fuel parameter comprises monitoring one or more of:

fuel flow, fuel valve stroke, throttling valve stroke, split valve stroke, fuel pressure, fuel temperature, fuel lower heating value, fuel composition, split ratio, or air/fuel ratio; and
wherein adjusting the at least one fuel parameter comprises adjusting one or more of:

fuel flow, fuel valve stroke, throttling valve stroke, split valve stroke, fuel pressure, fuel temperature, fuel lower heating value, fuel composition, fuel calorific value, split ratio, or air/fuel ratio.

**7.** The method (200) of any preceding claim, wherein monitoring (204) the one or more combustion dynamics characteristics comprises monitoring one or more of: acoustical amplitude, acoustical frequency, optical intensity, optical frequency, flame instabilities, and flame holding events.

**8.** The method (200) of any preceding claim, wherein monitoring (204) the one or more performance characteristics comprises monitoring one or more of compressor pressure discharge (CPD), compressor temperature discharge (CTD), turbine firing temperature, turbine exhaust temperature, turbine load, fuel flow rate, pressure, temperature, compressor inlet air pressure drop, compressor inlet flow, compressor inlet guide vanes (IGV) opening, turbine exhaust fluids flow, and ambient air conditions comprising one or more of air temperature, air pressure, air humidity, flame holding events, or heat balance.

**9.** The method (200) of any preceding claim, further comprising utilizing a universal transfer function (UTF) for controlling at least one turbine operating parameter based at least in part on the one or more performance characteristics.

**10.** A system (100) for compensating for fuel composition variations in a turbine comprising:

a gas turbine assembly (102);
a gas turbine controller (124) in communication with the gas turbine assembly ( 102);
one or more sensors (114) in communication with the gas turbine assembly (102) and gas turbine controller (124); and
a fuel evaluator (126) comprising at least one processor (130) configured to execute computer-executable instructions for:

receiving signals from the one or more sensors (114);
monitoring at least one fuel parameter associated with a turbine combustor ( 106);

monitoring one or more combustion dynamics characteristics associated with the turbine combustor (106);
monitoring one or more performance and emissions characteristics associated with the gas turbine assembly (102);
estimating fuel composition based at least in part on at least one fuel parameter, the one or more combustion dynamics characteristics, and the one or more performance and emissions characteristics; and
adjusting at least one parameter associated with the fuel based at least in part on the estimated fuel composition.

100

102

104
Compressor

106
Combustor

108
Turbine

110
Load

112

114
Sensors

116
Wobbe Meter /
Gas
Chromatograph

118
Fuel Valve
Stroke and
Fuel Pressure

120
Combustion
Dynamics

122
PR, Load,
Speed, Temp,
Emissions

124
Gas turbine
Controller

Fuel Evaluation 126

Memory 128

OS 136    Data 138

Composition 140

Processor(s) 130

I/O
Interface(s)
132

Network
Interface(s)
134

FIG. 1

200

Start

Monitoring at least one fuel parameter associated with a turbine combustor

202

Monitoring one or more combustion dynamics characteristics associated with the turbine combustor

204

Monitoring one or more performance and emissions characteristics associated with the turbine

206

Estimating fuel composition based at least in part on the at least one fuel parameter, the one or more combustion dynamics characteristics, and the one or more performance and emissions characteristics

208

Adjusting at least one fuel parameter based at least in part on the estimated fuel composition

210

End

# FIG. 2